# EUROPEAN PATENT APPLICATION

(11) **EP 4 607 343 A2**
(43) Date of publication of application: **27.08.2025**
(21) Application number: 25157757.3
(22) Date of filing: 13.02.2025
(51) Int. Cl.: G06F 9/451

(54) **METHOD FOR WALLPAPER SETTING, ELECTRONIC DEVICE**

(30) Priority: 23.02.2024 CN 202410204343
(71) Applicant: Nothing Technology Limited, London WC1N 2BF (GB)
(72) Inventor: HUANG, Minling, Shenzhen, Guangdong (CN)
(74) Representative: EIP

(57) **Abstract**

The present disclosure provides a method for wallpaper setting, an electronic device, and a computer-readable storage medium. The method for wallpaper setting is applicable to the electronic device, the electronic device includes a display, and the method for wallpaper setting includes the following. At least two wallpaper setting conditions are obtained. The at least two wallpaper setting conditions are compared with information tags of wallpapers in a wallpaper database, and candidate wallpapers each of which has information tags including the at least two wallpaper setting conditions are matched out from the wallpaper database, where the candidate wallpapers are generated through a preset wallpaper generation model according to a wallpaper generation statement associated with the at least two wallpaper setting conditions. At least part of the candidate wallpapers is displayed on the display of the electronic device. With the method for wallpaper setting provided in the present disclosure, personalized wallpaper setting needs of different users can be met, and thus the user experience is improved.

## Description

### TECHNICAL FIELD

This disclosure relates to the technical field of communication, in particular to a method for wallpaper setting, an electronic device.

### BACKGROUND

A desktop wallpaper of an electronic device is an important window for users to show their personalization. Different wallpapers can have different aesthetics and preferences. Currently, wallpaper applications on the market mainly provide static images or limited dynamic wallpaper images for users to select from. The wallpaper applications show the same wallpaper to different users, and the wallpaper is set in a simple way, which cannot provide a personalized wallpaper experience according to users' needs. With the application of artificial intelligence (AI), especially the maturity of language models represented by ChatGPT, there are more and more models for generating images and videos based on languages, but there are not many satisfactory solutions to how to apply corresponding results, especially to a terminal with limited computing power.

### SUMMARY

In order to solve the above technical problem or at least partially solve the above technical problem, the present disclosure provides a method for wallpaper setting, an electronic device, a computer program and a computer-readable storage medium.

To achieve the purpose mentioned above, in a first aspect of the present disclosure, a method for wallpaper setting is provided. The method for wallpaper setting is applicable to an electronic device, the electronic device includes a display, and the method for wallpaper setting includes the following. At least two wallpaper setting conditions are obtained. The at least two wallpaper setting conditions are compared with information tags of wallpapers in a wallpaper database, and candidate wallpapers each of which has information tags including the at least two wallpaper setting conditions are matched out from the wallpaper database, where the candidate wallpapers are generated through a preset wallpaper generation model according to a wallpaper generation statement associated with the at least two wallpaper setting conditions. At least part of the candidate wallpapers is displayed on the display of the electronic device.

With the method for wallpaper setting provided in the present disclosure, the wallpaper database is obtained by generating the wallpapers through the preset wallpaper generation model and labeling each wallpaper with corresponding information tags. Additionally, the at least two wallpaper setting conditions are obtained, and the candidate wallpapers are matched out from the wallpaper database for a user to select from, where information tags of each of the candidate wallpapers include the at least two wallpaper setting conditions. Compared with the existing wallpaper application that provides fixed wallpapers for the user to select from, in the method for wallpaper setting in the present disclosure, personalized wallpaper setting needs of different users can be met, and thus the user experience is improved.

In some implementations, before the at least two wallpaper setting conditions are obtained, the method for wallpaper setting further includes the following. A wallpaper generation instruction is obtained, and at least two prompts are obtained according to the wallpaper generation instruction. Wallpapers are generated through the preset wallpaper generation model according to a wallpaper generation statement obtained from the at least two prompts, where the wallpaper generation statement includes multiple restrictive conditions based on the at least two prompts. The wallpaper database is formed based on the wallpapers generated through the preset wallpaper generation model, where information tags of each of the wallpapers generated according to the at least two prompts include at least part of the at least two prompts.

In some implementations, the wallpaper database is formed based on the wallpapers generated through the preset wallpaper generation model as follows. Each of the wallpapers generated through the preset wallpaper generation model is parsed to obtain image content. Information tags of each of the wallpapers are obtained based on the image content. A wallpaper whose image content and/or information tags meet a preset elimination rule is eliminated from the wallpapers generated through the preset wallpaper generation model. Remaining wallpapers in the wallpapers generated through the preset wallpaper generation model are added to the wallpaper database.

In some implementations, there are multiple candidate wallpapers, the at least part of the candidate wallpapers is displayed on the display of the electronic device as follows. All the candidate wallpapers are displayed on the display of the electronic device in a random order.

In some implementations, after the at least part of the candidate wallpapers is displayed on the display of the electronic device, the method for wallpaper setting further includes the following. When a wallpaper switching instruction is still received after each of the candidate wallpapers is displayed, at least semantic association is performed on the at least two wallpaper setting conditions, and the preset wallpaper generation model is directly invoked to generate, according to a semantic association result, a new wallpaper.

In some implementations, after the at least part of the candidate wallpapers is displayed on the display of the electronic device, the method for wallpaper setting further includes the following. When the wallpaper switching instruction is still received after each of the candidate wallpapers is displayed, whether the computing power of the electronic device is less than a preset computing power threshold is determined. When the computing power of the electronic device is greater than or equal to the preset computing power threshold, at least semantic association is performed on the at least two wallpaper setting conditions, and the preset wallpaper generation model is directly invoked to generate, according to the semantic association result, the new wallpaper. When the computing power of the electronic device is less than the preset computing power threshold, the at least two wallpaper setting conditions are sent to a cloud server, so that the cloud server performs at least semantic association on the at least two wallpaper setting conditions and invokes the preset wallpaper generation model to generate, according to the semantic association result, the new wallpaper. The new wallpaper generated by the cloud server is obtained.

In some implementations, at least semantic association is performed on the at least two wallpaper setting conditions and the preset wallpaper generation model is directly invoked to generate, according to the semantic association result, the new wallpaper as follows. A style of icons on a display interface currently displayed on the display of the electronic device is identified, to obtain corresponding icon-style information. Semantic association is performed on the icon-style information and the at least two wallpaper setting conditions, and a candidate wallpaper is generated through the preset wallpaper generation model according to the semantic association result.

In some implementations, at least semantic association is performed on the at least two wallpaper setting conditions and the preset wallpaper generation model is directly invoked to generate, according to the semantic association result, the new wallpaper as follows. A layout of icons on a display interface currently displayed on the display of the electronic device is identified. Semantic association is performed on the at least two wallpaper setting conditions, and a candidate wallpaper that matches the layout of the icons on the display interface is generated through the preset wallpaper generation model according to the semantic association result.

In some implementations, at least semantic association is performed on the at least two wallpaper setting conditions and the preset wallpaper generation model is directly invoked to generate, according to the semantic association result, the new wallpaper as follows. At least semantic association is performed on the at least two wallpaper setting conditions, and the candidate wallpaper is generated through the preset wallpaper generation mode according to the semantic association result. New icons corresponding to the candidate wallpaper are generated through the preset wallpaper generation model.

In some implementations, the wallpapers generated through the preset wallpaper generation model include a dynamic wallpaper, and, the wallpapers are generated through the preset wallpaper generation model according to the wallpaper generation statement obtained from the at least two prompts as follows. A corresponding wallpaper generation statement is obtained according to the at least two prompts. At least one set of static images each including a target element is generated through the preset wallpaper generation model according to the wallpaper generation statement, where the target element is associated with the wallpaper generation statement, and each set of static images includes at least two static images. Dynamic transition processing is performed on two adjacent static images in each set of static images based on the target element, to obtain one dynamic wallpaper, where the number of times that dynamic transition processing is performed on any two adjacent static images in each set of static images is at least once, and one corresponding transition image is obtained through each dynamic transition processing.

In some implementations, the at least two wallpaper setting conditions are compared with the information tags of the wallpapers in the wallpaper database and the candidate wallpapers each of which has information tags including the at least two wallpaper setting conditions are matched out from the wallpaper database as follows. User use information of the electronic device is obtained. The at least two wallpaper setting conditions are compared with the information tags of the wallpapers in the wallpaper database, and candidate wallpapers are matched out from the wallpaper database, where information tags of each of the candidate wallpapers include the at least two wallpaper setting conditions and each of the candidate wallpapers matches the user use information.

In some implementations, the at least part of the candidate wallpapers are displayed on the display of the electronic device as follows. The number of times that each of the candidate wallpapers is used is counted. *m* candidate wallpapers with the lowest usage counts among all the candidate wallpapers are displayed on the display of the electronic device in an ascending order of usage counts, where *m* ≥ 1.

In some implementations, the electronic device is provided with multiple first-type wallpaper setting conditions and multiple second-type wallpaper setting conditions, and the at least two wallpaper setting conditions are obtained as follows. In response to a random wallpaper generation instruction, one first-type wallpaper setting condition is randomly obtained from the multiple first-type wallpaper setting conditions, and one second-type wallpaper setting condition is randomly obtained from the multiple second-type wallpaper setting conditions.

In some implementations, the at least two wallpaper setting conditions are obtained as follows. A phrase and/or a segment input by a user are obtained. The phrase and/or the segment input by the user are converted into the at least two wallpaper setting conditions through a preset language model. In a second aspect of the present disclosure, an electronic device is further provided. The electronic device includes a display, a processor, and a memory. The display, the processor, and the memory are coupled with one another. The memory is configured to store a computer program. The processor is configured to execute the computer program to perform the operations of the method for wallpaper setting in the first aspect. In a third aspect of the present disclosure, a computer program is further provided. When the computer program is executed by the processor of the electronic device, it causes the electronic device to carry out the method for wallpaper setting in the first aspect. In a fourth aspect of the present disclosure, a computer-readable storage medium is further provided. In some implementations, the computer-readable storage medium is non-transitory. The computer-readable storage medium is configured to store the computer program of the third aspect. When the computer program is executed by the processor of the electronic device, it causes the processor to perform the method for wallpaper setting in the first aspect.

Additional aspects and advantages of the present disclosure will be given in part in the following description, part of which will become apparent from the following description or will be learned from the practice of the present disclosure.

### BRIEF DESCRIPTION OF THE DRAWINGS

FIG. 1 is a schematic structural diagram of an electronic device provided in implementations of the present disclosure.
FIG. 2 is a flowchart of a method for wallpaper setting provided in implementations of the present disclosure.
FIG. 3 is a diagram illustrating the effect of a first wallpaper provided in implementations of the present disclosure.
FIG. 4 is a diagram illustrating the effect of a second wallpaper provided in implementations of the present disclosure.
FIG. 5 is a schematic structural diagram of an electronic device provided in implementations of the present disclosure.
Reference signs: electronic device 100, display 1, processor 2, memory 3, wallpaper setting window 10, first selection control 11, second selection control 12, wallpaper generation trigger control 13, random wallpaper mode control 14.

The following will describe the present disclosure in the following specific implementations with reference to the accompanying drawings.

### DETAILED DESCRIPTION

The following will clearly and completely describe technical solutions of implementations of the present disclosure with reference to accompanying drawings in implementations of the present disclosure. Apparently, implementations described herein are merely some implementations, rather than all implementations, of the present disclosure. Based on the implementations of the present disclosure, all other implementations obtained by those of ordinary skill in the art without creative effort shall fall within the protection scope of the present disclosure.

In addition, the terms "first", "second", and the like in the specification of the present disclosure are used to distinguish similar objects, and are not necessarily used to describe a particular sequence or order. It should be understood that, the terms thus used may be interchangeable where appropriate, so that the implementations of the present disclosure described herein, for example, can be implemented in a sequence other than those illustrated or described herein. In addition, the terms "include", "comprise", and "have" as well as variations thereof are intended to cover a non-exclusive inclusion. For example, a process, method, system, product, or device including a series of steps or units is not limited to the listed steps or units, and instead, it can optionally include other steps or units that are not listed or other steps or units inherent to the process, method, product, or device.

It can be noted that, in the case of no conflict, the features in implementations of the present disclosure may be combined with each other.

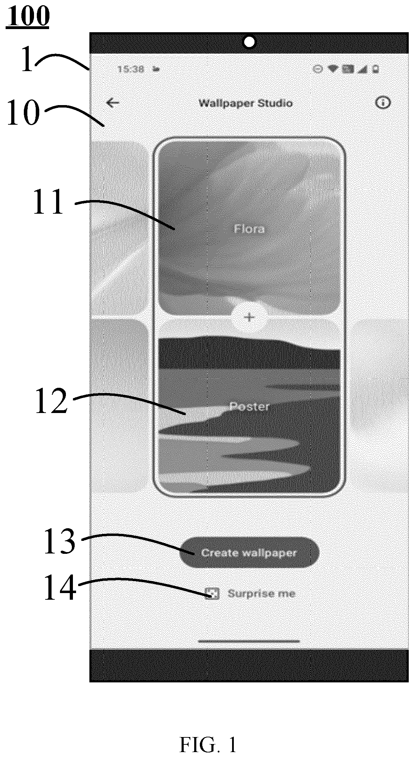

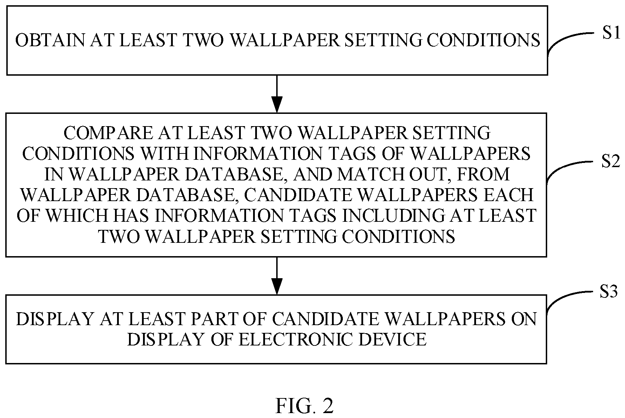

Reference can be made to FIG. 1 and FIG. 2. The present disclosure provides a method for wallpaper setting, and the method for wallpaper setting is applicable to an electronic device 100. FIG. 1 is a schematic structural diagram of an electronic device provided in the present disclosure. FIG. 2 is a flowchart of the method for wallpaper setting provided in implementations of the present disclosure.

As illustrated in FIG. 1, the electronic device 100 includes a display 1.

As illustrated in FIG. 2, the method for wallpaper setting includes operations at S1 to S3, which are specifically introduced as follows.

S1, at least two wallpaper setting conditions are obtained.

S2, the at least two wallpaper setting conditions are compared with information tags of wallpapers in a wallpaper database, and candidate wallpapers each of which has information tags including the at least two wallpaper setting conditions are matched out from the wallpaper database.

The candidate wallpapers are generated through a preset wallpaper generation model according to a wallpaper generation statement associated with the at least two wallpaper setting conditions.

S3, at least part of the candidate wallpapers is displayed on the display 1 of the electronic device100.

The candidate wallpapers displayed on the display 1 of the electronic device 100 can be selected by a user as a current wallpaper of the electronic device 100.

The preset wallpaper generation model can be a model trained with an artificial intelligence generated content (AIGC) model as a basic network model. The AIGC model can be understood as a large language model (LLM) similar to ChatGPT3.0 and more advanced iterations, which has strong text parsing and content generation capabilities.

In some implementations, the wallpaper database can be generated according to the obtained at least two wallpaper setting conditions by the electronic device 100 through the preset wallpaper generation model invoked in real-time, or by the electronic device 100 invoking the preset wallpaper generation model before the at least two wallpaper setting conditions are obtained. In some implementations, the wallpaper database can be generated by a cloud server or a third-party wallpaper generation tool according to the at least two wallpaper setting conditions obtained by the electronic device 100 through the preset wallpaper generation model invoked in real-time, or by the cloud server or the third-party wallpaper generation tool invoking the preset wallpaper generation model before the at least two wallpaper setting conditions are obtained by the electronic device 100. It can be understood that when the wallpaper database is generated through the preset wallpaper generation model in the cloud server or the third-party wallpaper generation tool for the electronic device 100 to select from, a problem that an electronic device 100 with low computing power cannot set the wallpaper by using the AI model can be solved.

The wallpaper database includes multiple wallpapers and at least two information tags corresponding to each wallpaper. For example, assuming that the at least two wallpaper setting conditions include two wallpaper setting conditions of "flora" and "poster", the wallpaper database includes wallpaper A, wallpaper B, and wallpaper C, information tags of wallpaper A include "flora", "poster", and "green", information tags of wallpaper B include "animal", "comic", and "dog", and the information tags of wallpaper C include "character", "comic", "Lolita", and "cute", then wallpaper A is a candidate wallpaper corresponding to the at least two wallpaper setting conditions.

With the method for wallpaper setting provided in the present disclosure, the wallpaper database is obtained by generating the wallpapers through the preset wallpaper generation model and labeling each wallpaper with the information tags. Additionally, the at least two wallpaper setting conditions are obtained, and the candidate wallpapers are matched out from the wallpaper database for a user to select from, where information tags of each of the candidate wallpapers include the at least two wallpaper setting conditions. Compared with the existing wallpaper application that provides fixed wallpapers for the user to select from, in the method for wallpaper setting in the present disclosure, the personalized wallpaper setting needs of different users can be met, and thus the user experience is improved.

In some implementations, the electronic device 100 can be a large screen, a mobile phone, a tablet computer, a desktop computer, a laptop computer, a handheld computer, a notebook computer, an ultra-mobile personal computer (UMPC), a netbook, a cellular phone, a personal digital assistant (PDA), an augmented reality (AR) device, a virtual reality (VR) device, an artificial intelligence (AI) device, a wearable device, an in-vehicle device, a smart home device and/or a smart city device, etc. Implementations of the present disclosure do not limit the specific type of the electronic device 100.

In some implementations, the display 1 can be a touch display, a liquid crystal display (LCD), an organic light-emitting diode (OLED), an active-matrix OLED (AMOLED), a flexible organic light-emitting diode (FOLED), miniature light emitting diode (Mini LED), micro light emitting diode (Micro LED), Micro-OLED, a quantum dot light-emitting diode (QLED), etc.

In some implementations, a wallpaper setting application (APP) icon is displayed on the display 1 of the electronic device 100. Before the at least two wallpaper setting conditions are obtained, the method for wallpaper setting further includes the following.

In response to a trigger instruction for the wallpaper setting APP icon, a wallpaper setting window 10 is displayed on the display 1 of the electronic device 100.

The wallpaper setting window 10 can include multiple functional controls, such as a wallpaper parameter setting control. The wallpaper parameter setting control is used by the user to input wallpaper setting conditions.

In some implementations, the electronic device 100 is provided with multiple types of wallpaper setting conditions, and the wallpaper parameter setting control includes multiple selection controls in one-to-one correspondence with the multiple types of wallpaper setting conditions. For example, the electronic device 100 is provided with multiple first-type wallpaper setting conditions and multiple second-type wallpaper setting conditions. In some implementations, the multiple first-type wallpaper setting conditions are multiple wallpaper subject-type setting conditions, which can include at least one of subject-type setting conditions such as "water", "sky", "flora", "animal", "technology", "car", "two dimensions", "sport", "science fiction", "character", etc. The multiple second-type wallpaper setting conditions are multiple wallpaper style-type setting conditions, which can include at least one of style-type setting conditions such as "cute", "simple", "Chinese trends", "exaggerated", "funny", "poster", "colourful", "dark", "monochrome", "painting", "sketch", "black and white image", "drawing", etc. The multiple selection controls include a first selection control 11 and a second selection control 12. The first selection control 11 is for selection of a wallpaper subject type, and the second selection control 12 is for selection of a wallpaper style type.

In some implementations, the at least two wallpaper setting conditions are obtained as follows. One first-type wallpaper setting condition is obtained through the first selection control 11, and one second-type wallpaper setting condition is obtained through the second selection control 12.

In some implementations, the user can select, through the first selection control 11 and the second selection control 12, two wallpaper setting conditions of "flora" and "poster" as illustrated in FIG. 1, two wallpaper setting conditions of "flora" and "image", two wallpaper setting conditions of "sky" and "black and white image", or other combinations of wallpaper setting conditions.

In some implementations, the wallpaper parameter setting control can also be a text input control, and the text input control is used by the user to input a phrase and/or a segment. The at least two wallpaper setting conditions are obtained as follows. The phrase and/or the segment input by the user are obtained. The phrase and/or the segment input by the user are converted into the at least two wallpaper setting conditions through a preset language model.

The preset language model can be an LLM that can interact through learning and understanding human language, or can be a natural language understanding (NLU) model that can perform semantic recognition on voice information or text information input by the user, etc. The preset language model can convert the phrases and/or the segment input by the user into wallpaper setting conditions in a standard format. For example, assuming that the phrase and/or the segment input by the user include one of blue, international Klein blue (IKB), and sunny day, the preset language model can obtain a wallpaper setting condition of "blue".

In this way, the electronic device 100 can obtain corresponding wallpaper setting conditions according to any text input by the user.

In some implementations, the wallpaper setting window 10 can further include a wallpaper generation trigger control 13. The wallpaper generation trigger control 13 is configured to receive a wallpaper generation trigger instruction input by the user after the wallpaper setting conditions are input by the user through the wallpaper parameter setting control, so as to trigger the electronic device 100 to start obtaining candidate wallpapers corresponding to the wallpaper setting condition combination.

The at least two wallpaper setting conditions are compared with the information tags of the wallpapers in the wallpaper database and the candidate wallpapers each of which has information tags including the at least two wallpaper setting conditions are matched out from the wallpaper database as follows. In response to the wallpaper generation trigger instruction, the at least two wallpaper setting conditions are compared with the information tags of the wallpapers in the wallpaper database, and the candidate wallpapers are matched out from the wallpaper database, where information tags of the each of the candidate wallpapers include the at least two wallpaper setting conditions.

In some implementations, the wallpaper generation trigger control 13 may not be set. In this case, after the operations at S1 are performed, that is, the at least two wallpaper setting conditions are obtained, the operations at S2 are automatically performed, that is, the at least two wallpaper setting conditions are compared with the information tags of the wallpapers in the wallpaper database, and the candidate wallpapers are matched out from the wallpaper database, where information tags of the each of the candidate wallpapers include the at least two wallpaper setting conditions.

In some implementations, the wallpaper setting window 10 can further include a random wallpaper mode control 14. The random wallpaper mode control 14 is configured to receive a random wallpaper generation instruction input by the user.

The at least two wallpaper setting conditions are obtained as follows. In response to the random wallpaper generation instruction, one first-type wallpaper setting condition is randomly obtained from the multiple first-type wallpaper setting conditions, and one second-type wallpaper setting condition is randomly obtained from the multiple second-type wallpaper setting conditions.

In this way, the electronic device 100 can obtain, according to the randomly obtained first-type wallpaper setting condition and the randomly obtained second-type wallpaper setting condition, corresponding candidate wallpapers for the user to select from, thereby improving the interest.

In some implementations, the at least two wallpaper setting conditions are compared with the information tags of the wallpapers in the wallpaper database and the candidate wallpapers each of which has information tags including the at least two wallpaper setting conditions are matched out from the wallpaper database as follows. User use information of the electronic device 100 is obtained. The at least two wallpaper setting conditions are compared with the information tags of the wallpapers in the wallpaper database, and the candidate wallpapers are matched out from the wallpaper database, where information tags of each of the candidate wallpapers include the at least two wallpaper setting conditions and each of the candidate wallpapers matches the user use information.

In some implementations, in some implementations, the user use information can include previous wallpapers. For example, the at least two wallpaper setting conditions include two wallpaper setting conditions of "blue" and "sky". If the style of the previous wallpapers of the electronic device 100 is pastoral style, it can be concluded that the user use information is "pastoral style". Therefore, when the wallpapers are filtered, a wallpaper whose information tags include both "blue" and "sky" and whose style is the pastoral style will be matched out from the wallpaper database. In some implementations, the user use information can also include selection information of previous candidate wallpapers. In this way, it can be known which types of wallpapers the user likes and which types of wallpapers the user does not like, so that a candidate wallpaper that meets the user's preferences can be matched out preferentially.

In some implementations, before the at least two wallpaper setting conditions are obtained, the method for wallpaper setting further includes the following. A wallpaper generation instruction is obtained, and at least two prompts are obtained according to the wallpaper generation instruction. Wallpapers are generated through the preset wallpaper generation model according to a wallpaper generation statement obtained from the at least two prompts, where the wallpaper generation statement includes multiple restrictive conditions based on the at least two prompts. The wallpaper database is formed based on the wallpapers generated through the preset wallpaper generation model, where information tags of each of the wallpapers generated according to the at least two prompts include at least part of the at least two prompts.

The prompts are context or initial text input into the LLM to guide the large model to generate a specific output. The prompt length is calculated in token, and the LLM has a limit on the longest prompt that can be input. The prompts can include a positive prompt and a negative prompt. For example, the prompts can include "flat vector illustration", "peony", "extreme close-up", "flat", "colour", "close-up", "macro", "details", "aesthetics", "sharp", "details", "brushstroke", "fairy tale", "enlargement", "Japanese illustration", "pattern", "repetition", "ugly", "random", "deformed", "frame", "border", "oversaturated", "boring", "contour", "realistic", etc.

In some implementations, the wallpaper generation instruction can be an input text instruction. Assuming the text instruction is "I want to generate a winter landscape image, with heavy snow in the sky and children having a snowball fight in the snow", then prompts corresponding to the wallpaper generation instruction can include "winter", "landscape", "sky", "heavy snow", "children", "snow", and "snowball fight", and each of multiple wallpapers generated according to these prompts can include "winter", "landscape", "sky", "heavy snow", "children", "snow", "snowball fight", "cheerful", "snowball", "white", "simple", etc.

The wallpaper generation statement can be generated through the preset language model by performing semantic association on the at least two prompts. In other words, the wallpaper generation statement is obtained through semantic analysis of each of the at least two prompts and semantic association of prompts according to the semantics of each prompt. For example, the at least two prompts include two prompts of "blue" and "sky", then the two prompts are semantically associated, and the obtained wallpaper generation statement can include "blue sky" and multiple restrictive conditions derived from "blue sky", such as "there are clouds in the sky" and "the range of blue tones is within a preset range". In this way, a wallpaper with an excessively dark blue sky or other scenery in the sky will not be generated.

In some implementations, the at least two prompts can be semantically associated through the LLM. The LLM is an AI model trained with a large amount of data, which can understand and generate human language. The LLM refers to a deep-learning language model with large-scale language model parameters, which usually includes hundreds of millions, tens of billions, and hundreds of billions of language model parameters. The LLM can also be referred to as a foundation model. The LLM is pre-trained with large-scale unlabeled corpus to produce a pre-trained language model with more than 100 million parameters that can be adapted to a wide range of downstream tasks and has good generalization ability, such as the LLM, a multi-modal pre-training model, etc.

It can be understood that since the preset wallpaper generation model has a large amount of calculation and takes a long time when generating the wallpapers, the wallpaper database is generated before the electronic device 100 obtains the at least two wallpaper setting conditions. In this way, the generation of the wallpaper database and the filtering of the candidate wallpapers from the wallpaper database are staggered in time, which can improve the response speed. In addition, partial prompts obtained according to the wallpaper generation instruction are directly taken as information tags of multiple wallpapers generated according to the wallpaper generation instruction. For example, instead of manually labeling the generated wallpapers, all positive prompts are directly taken as the information tags of the multiple wallpapers generated according to the wallpaper generation instruction, which is more efficient.

It can be noted that since there may be errors in the understanding of the LLM, some wallpapers generated through the preset wallpaper generation model according to the wallpaper generation statement may not meet the requirements.

In view of this, in some implementations, the wallpaper database is formed based on the wallpapers generated through the preset wallpaper generation model as follows. Each of the wallpapers generated through the preset wallpaper generation model is parsed to obtain image content. Information tags of each of the wallpapers are obtained based on the image content. A wallpaper whose image content and/or information tags meet a preset elimination rule is eliminated from the wallpapers generated through the preset wallpaper generation model. Remaining wallpapers in the wallpapers generated through the preset wallpaper generation model are added to the wallpaper database.

After a certain wallpaper is parsed, information included in image content of the wallpaper, such as image elements, layout, style, subject, resolution, size, colour scheme, etc., can be determined. In some implementations, the information tags include at least one of copyright information, wallpaper style information, wallpaper size information, or wallpaper colour scheme information. For example, it can be determined through parsing that an image element of a certain wallpaper includes "sky", then "sky" can be taken as an information tag of the wallpaper. For example, it can be determined through parsing that an image element of a certain wallpaper includes horror image elements such as "skull", then "horror" can be taken as an information tag of the wallpaper.

In some implementations, the preset elimination rule can include at least one of an image content elimination rule, an image quality elimination rule, or a copyright elimination rule. The image content elimination rule can be that the image content of the wallpaper includes at least one of a horror element, a violent element, a bloody element, or a pornographic element. The image quality elimination rule can include that the image resolution of the wallpaper is not within a preset resolution threshold range, and/or the image size is not within a preset size threshold range, and/or the colour scheme of the image does not meet a preset colour scheme requirement. The copyright elimination rule can be that the wallpaper infringes on the copyright or trademark rights of others.

In this way, for one thing, when the wallpapers are generated, a wallpaper with poor image quality and an illegal wallpaper can be eliminated, thereby ensuring that all the wallpapers in the wallpaper database are high-quality. For another thing, instead of manual recognition, the wallpapers can be automatically labeled by parsing the wallpapers through software, which is more efficient.

In some implementations, there are multiple candidate wallpapers, and the at least part of the candidate wallpapers is displayed on the display 1 of the electronic device 100 as follows. All the candidate wallpapers are displayed on the display 1 of the electronic device 100 in a random order.

In this way, when the user inputs the same wallpaper setting condition multiple times, the user is less likely to obtain the same candidate wallpaper, thereby improving the personalization.

In some implementations, the at least part of the candidate wallpapers is displayed on the display 1 of the electronic device 100 as follows. The number of times that each candidate wallpaper is used is counted. *m* candidate wallpapers with the lowest usage counts among all the candidate wallpapers are displayed on the display 1 of the electronic device 100 in an ascending order of usage counts, where *m* ≥ 1.

In this way, the least frequently used candidate wallpaper can be preferentially recommended to the user, which is more personalized.

In some implementations, when the at least part of the candidate wallpapers is displayed on the display 1 of the electronic device 100, the wallpaper setting window 10 further includes a wallpaper switching control (not illustrated in the figure). The wallpaper switching control is configured to receive a wallpaper switching instruction input by the user, so as to switch a current candidate wallpaper displayed on the display 1 of the electronic device 100 to a next candidate wallpaper.

In some implementations, after the at least part of the candidate wallpapers is displayed on the display 1 of the electronic device 100, the method for wallpaper setting further includes the following. When the wallpaper switching instruction is still received after each of the candidate wallpapers is displayed, at least semantic association is performed on the at least two wallpaper setting conditions, and the preset wallpaper generation model is directly invoked to generate, according to a semantic association result, a new wallpaper.

The semantic association result can be generated through the preset language model by performing semantic association on the at least two wallpaper setting conditions. In other words, the semantic association result is obtained through semantic analysis of each of the at least two wallpaper setting conditions and semantic association of wallpaper setting conditions according to the semantics of each wallpaper setting condition. For example, if the at least two wallpaper setting conditions include a subject-type setting condition of "flora" and a style-type setting condition of "poster", the two wallpaper setting conditions are semantically associated, and the obtained semantic association result can be "flora-subjected poster-style wallpaper".

In this way, when the user is not satisfied with all candidate wallpapers obtained according to the at least two wallpaper setting conditions, a new wallpaper can be generated in real-time for the user to select from, which provides a wider selection and a better user experience.

In some implementations, after the at least part of the candidate wallpapers is displayed on the display 1 of the electronic device 100, the method for wallpaper setting further includes the following. When the wallpaper switching instruction is still received after each of the candidate wallpapers is displayed, whether the computing power of the electronic device 100 is less than a preset computing power threshold is determined. Based on a determination that the computing power of the electronic device is greater than or equal to the preset computing power threshold, at least semantic association is performed on the at least two wallpaper setting conditions, and the preset wallpaper generation model is directly invoked to generate, according to the semantic association result, the new wallpaper. Based on a determination that the computing power of the electronic device is less than the preset computing power threshold, the at least two wallpaper setting conditions are sent to a cloud server, so that the cloud server performs at least semantic association on the at least two wallpaper setting conditions and invokes the preset wallpaper generation model to generate, according to the semantic association result, the new wallpaper. The new wallpaper generated by the cloud server is obtained.

The preset computing power threshold can be determined according to the minimum computing power requirement for invoking the preset wallpaper generation model.

In some implementations, in some implementations, when the electronic device 100 adopts a chip with a special AI computing module such as 8gen3, the computing power is greater than or equal to the preset computing power threshold. In this case, the electronic device 100 can directly invoke the preset wallpaper generation model to generate the new wallpaper. In some implementations, when the electronic device 100 adopts a conventional chip that is not equipped with the specific AI computing module, the computing power is less than the preset computing power threshold. In this case, the preset wallpaper generation model is invoked through the cloud server to generate the new wallpaper, so that the undesirable experience of slow response speed caused by forced invocation of the preset wallpaper generation model by the electronic device 100 can be avoided.

In this way, when the computing power of the electronic device 100 is strong, the candidate wallpapers are generated through the preset wallpaper generation model according to the semantic association result, which can avoid obtaining duplicate wallpapers from the wallpaper database and make it more personalized. When the computing power of the electronic device 100 is weak, the candidate wallpapers are retrieved from the wallpaper database according to the semantic association result, which can save system resources and improve response speed.

In some implementations, at least semantic association is performed on the at least two wallpaper setting conditions and the preset wallpaper generation model is directly invoked to generate, according to the semantic association result, the new wallpaper as follows. The style of icons on a display interface currently displayed on the display 1 of the electronic device 100 is identified, to obtain corresponding icon-style information. Semantic association is performed on the icon-style information and the at least two wallpaper setting conditions, and a candidate wallpaper is generated through the preset wallpaper generation model according to the semantic association result.

The icons refer to an icon of each APP.

In some implementations, assuming that the at least two wallpaper setting conditions include two wallpaper setting conditions of "flora" and "poster" and the style of the icons on the display interface currently displayed on the display 1 of the electronic device 100 is comic style, then the semantic association result obtained by performing semantic association on the icon-style information and the at least two wallpaper setting conditions is "flora-subjected comic poster".

In this way, by identifying the style of the icon, a candidate wallpaper that is consistent with the icon style can be obtained, thereby having a better display effect.

In some implementations, at least semantic association is performed on the at least two wallpaper setting conditions and the preset wallpaper generation model is directly invoked to generate, according to the semantic association result, the new wallpaper as follows. A layout of the icons on the display interface currently displayed on the display 1 of the electronic device 100 is identified. Semantic association is performed on the at least two wallpaper setting conditions, and a candidate wallpaper that matches the layout of the icons on the display interface is generated through the preset wallpaper generation model according to the semantic association result.

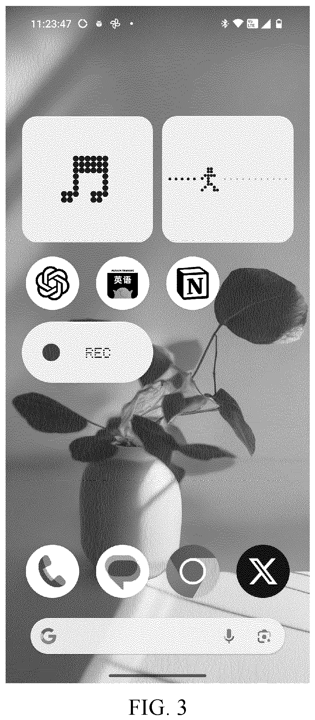

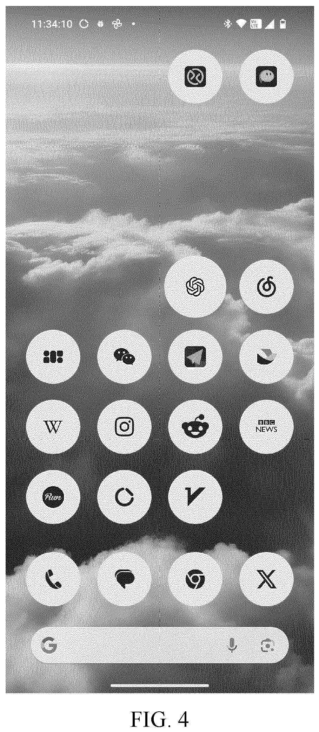

In some implementations, according to the layout of the icons on the display interface, a blank area without any icon on the display interface can be determined, so that a wallpaper in which a position of a main image element matches the blank area is generated. For example, as illustrated in FIG. 3, assuming that the at least two wallpaper setting conditions include the two wallpaper setting conditions of "flora" and "poster", the icons are mainly distributed in an upper-left corner area of the current display interface of the electronic device 100, and there is a large blank area in the lower-right corner, then a "flora-subjected poster" wallpaper with floras located in a lower-right corner of an image can be generated. In this way, the main image element in the generated candidate wallpaper will not be obscured by the icons, and thus the display effect is better. For example, as illustrated in FIG. 4, assuming that the at least two wallpaper setting conditions include the two wallpaper setting conditions of "cloud" and "black and white image", the icons are densely arranged on the current display interface of the electronic device 100, then a "cloud-subjected black and white image" wallpaper with scattered clouds can be generated.

In some implementations, when the user selects a certain candidate wallpaper, the icons can be automatically arranged according to the selected wallpaper, so that the position of the main image element and the positions of the icons can coexist harmoniously in the display.

In some implementations, at least semantic association is performed on the at least two wallpaper setting conditions and the preset wallpaper generation model is directly invoked to generate, according to the semantic association result, the new wallpaper as follows. Device information of the electronic device 100 is obtained. Semantic association is performed on the at least two wallpaper setting conditions, and a candidate wallpaper corresponding to the device information is generated through the preset wallpaper generation model according to the semantic association result.

In some implementations, the device information can include the shape, size, resolution, etc. of the display 1 of the electronic device 100. For example, if the electronic device 100 is a watch, and the display 1 is circular, 1.4 inches, and has a resolution of 400 × 400 pixels, then a candidate wallpaper with a shape, size, and resolution corresponding to the display 1 can be generated.

In some implementations, at least semantic association is performed on the at least two wallpaper setting conditions and the preset wallpaper generation model is directly invoked to generate, according to the semantic association result, the new wallpaper as follows. At least semantic association is performed on the at least two wallpaper setting conditions, and a candidate wallpaper is generated through the preset wallpaper generation model according to the semantic association result. New icons corresponding to the candidate wallpaper are generated through the preset wallpaper generation model.

The generation of new icons corresponding to the candidate wallpaper can be the generation of new icons with the style, and/or subject, and/or tone, and/or background consistent with the candidate wallpaper.

In some implementations, as illustrated in FIG. 4, assuming that the at least two wallpaper setting conditions include two wallpaper setting conditions of "cloud" and "black and white image", when the wallpapers are generated, new icons in the style of the black and white image can be generated.

In this way, the new icons corresponding to the candidate wallpaper are generated while the candidate wallpapers are generated, so that when the user sets the candidate wallpaper as the current wallpaper of the electronic device 100, the icons on the display interface can be replaced with corresponding new icons at the same time, thereby making the style of the display interface more unified and the display effect better.

In some implementations, the new icons corresponding to the candidate wallpaper are generated through the preset wallpaper generation model as follows. New icons with at least partially transparent background are generated through the preset wallpaper generation model.

When the new icons with at least partially transparent background are generated, a border of each icon can be kept, and the border of each icon is labeled with an APP name. In this way, the new icons and the candidate wallpaper can be integrated together, and the visual experience is better.

In some implementations, the wallpapers generated through the preset wallpaper generation model include a dynamic wallpaper. The wallpapers are generated through the preset wallpaper generation model according to the wallpaper generation statement obtained from the at least two prompts as follows. A corresponding wallpaper generation statement is obtained according to the at least two prompts. At least one set of static images each including a target element is generated through the preset wallpaper generation model according to the wallpaper generation statement, where the target element is associated with the wallpaper generation statement, and each set of static images includes at least two static images. Dynamic transition processing is performed on two adjacent static images in each set of static images based on the target element, to obtain one dynamic wallpaper, where the number of times that dynamic transition processing is performed on any two adjacent static images in each set of static images is at least once, and one corresponding transition image is obtained through each dynamic transition processing.

In order to enhance the visual change effect of the dynamic wallpaper, in some implementations, the user can set the number of times that dynamic transition processing is performed on any two adjacent static images. When the user sets the number of times that dynamic transition processing is performed on any two adjacent static images to multiple times, multiple transition images can be obtained through multiple dynamic transition processing. Based on these multiple transition images, multiple continuous change states based on the target element between the two adjacent images can be generated. In some implementations, assuming that the at least two prompts include "girl" and "laughing", then the wallpaper generation statement is "a wallpaper with a laughing girl", the target element is "a girl's face", and each set of static images generated based on the at least two prompts includes "a girl's face", so that multiple transition images in which a girl has a smile on her face can be obtained through multiple dynamic transition processing between two adjacent static images, and then based on these multiple transition images, a dynamic wallpaper with continuous changes in the facial expression of the girl as she laughs can be generated.

In this way, the user can obtain the dynamic wallpaper from the wallpaper database, thereby having a wider range of selections.

In some implementations, after the at least part of the candidate wallpapers is displayed on the display 1 of the electronic device 100, the method for wallpaper setting further includes the following. In response to a selection instruction that the user selects one target wallpaper among the at least part of the candidate wallpapers, the target wallpaper is set as the wallpaper of the electronic device 100. When at least two wallpaper setting conditions are obtained next time, the target wallpaper is displayed on the display 1 of the electronic device 100.

In this way, when the user sets the wallpaper, the previous wallpapers that the user has selected can be provided to the user for preview and filtering, making the operation more convenient.

In some implementations, the user can select multiple target wallpapers at the same time, and each time the user unlocks the electronic device 100, the electronic device 100 displays the multiple target wallpapers in turn. Alternatively, the multiple target wallpapers are in one-to-one correspondence with multiple periods, and the electronic device 100 displays a corresponding wallpaper among the multiple target wallpapers in each period.

In some implementations, the method for wallpaper setting further includes the following. A correspondence between previous wallpaper setting conditions and candidate wallpapers obtained and displayed according to the previous wallpaper setting conditions is recorded. While new wallpaper setting conditions that are the same as the previous wallpaper setting conditions are received, at least part of candidate wallpapers that have not yet been displayed among the candidate wallpapers obtained according to the previous wallpaper setting conditions is displayed on the display 1 of the electronic device 100.

In this way, through software deduplication, the user will not obtain the same candidate wallpaper when inputting repeated wallpaper setting conditions.

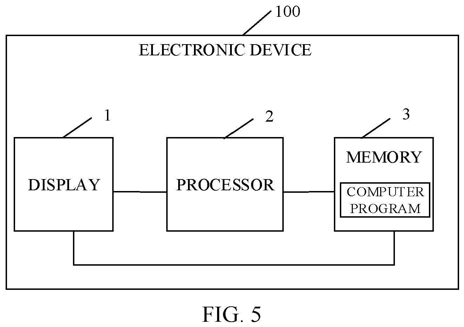

Reference can be made to FIG. 1 again as well as FIG. 5, based on the same inventive concept, the present disclosure further provides an electronic device 100. The electronic device 100 includes a display 1, a processor 2, and a memory 3. The display 1, the processor 2, and the memory 3 are coupled to each other. The memory 3 is configured to store a computer program. The processor 2 is configured to execute the computer program to perform the operations of the method for wallpaper setting of any of the above implementations.

In some implementations, the processor executes the computer program to perform the following operations.

S1, at least two wallpaper setting conditions are obtained.

S2, the at least two wallpaper setting conditions are compared with information tags of wallpapers in a wallpaper database, and candidate wallpapers each of which has information tags including the at least two wallpaper setting conditions are matched out from the wallpaper database, where the candidate wallpapers are generated through a preset wallpaper generation model according to a wallpaper generation statement associated with the at least two wallpaper setting conditions.

S3, at least part of the candidate wallpapers is displayed on the display 1 of the electronic device 100.

With the electronic device 100 provided in the present disclosure, the wallpaper database is obtained by generating the wallpapers through the preset wallpaper generation model and labeling each wallpaper with the information tags. Additionally, the at least two wallpaper setting conditions are obtained, and the candidate wallpapers are matched out from the wallpaper database for a user to select from, where information tags of each of the candidate wallpapers include the at least two wallpaper setting conditions. Compared with the existing wallpaper application that provides fixed wallpapers for the user to select from, in the method for wallpaper setting in the present disclosure, the personalized wallpaper setting needs of different users can be met, and thus the user experience is improved.

Based on the same inventive concept, the present disclosure further provides a computer-readable storage medium. The computer-readable storage medium is configured to store a computer program which, when invoked and executed by a processor, causes the processor to perform the operations of the method for wallpaper setting of any of the above implementations.

The computer storage medium provided in the present disclosure may be any combination of one or more computer-readable medium(s). The computer-readable medium may be a computer-readable signal medium or a computer-readable storage medium. The computer-readable storage medium may be, for example, but not limited to, an electronic, magnetic, optical, electromagnetic, infrared, or semiconductor system, apparatus, or device, or any combination thereof. More specific examples (a non-exhaustive list) of the computer-readable storage medium include the following: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical memory, a magnetic memory, or any combination thereof. In the present disclosure, the computer-readable storage medium may be any tangible medium that can include or store a program for use by or in connection with an instruction execution system, apparatus, or device.

The computer-readable signal medium may include a propagated data signal in baseband or as part of a carrier wave, and the propagated data signal carries computer-readable program codes. Such a propagated signal may take any of a variety of forms, including, but not limited to, electro-magnetic, optical, or any combination thereof. The computer-readable signal medium may be any computer-readable medium other than the computer-readable storage medium. The computer-readable medium can send, propagate, or transport a program for use by or in connection with an instruction execution system, apparatus, or device.

The program codes included in the computer-readable medium may be transmitted using any appropriate medium, including but not limited to wireless, wired, optical fiber cable, radio frequency (RF), etc. or any suitable combination thereof.

Computer program code for performing the operations in the present disclosure may be written in any combination of one or more programming languages, including an object-oriented programming language, such as JAVA, Smalltalk, C++, etc., and conventional procedural programming languages, such as C language or similar programming languages. The program code may execute entirely on the user's computer, partly on the user's computer, as a stand-alone software package, partly on the user's computer and partly on a remote computer, or entirely on the remote computer or server. In a scenario related to the remote computer, the remote computer may be connected to the user's computer through any type of network, including a local area network (LAN) or a wide area network (WAN), or may be connected to an external computer (for example, through the Internet by using an internet service provider).

Although implementations of the present disclosure have been illustrated and described, it would be appreciated by those skilled in the art that changes, modifications, alternatives, and transformations can be made in the implementations without departing from the principle and purpose of the present disclosure. The scope of the present disclosure shall be subject to the protection scope of the claims and their equivalents.

## Claims

1. A method for wallpaper setting, applicable to an electronic device having a display and comprising:
obtaining at least two wallpaper setting conditions;
comparing the at least two wallpaper setting conditions with information tags of wallpapers in a wallpaper database, and matching out, from the wallpaper database, candidate wallpapers each of which has information tags comprising the at least two wallpaper setting conditions, wherein the candidate wallpapers are generated through a preset wallpaper generation model according to a wallpaper generation statement associated with the at least two wallpaper setting conditions; and
displaying at least part of the candidate wallpapers on the display of the electronic device.

2. The method for wallpaper setting of claim 1, wherein before obtaining the at least two wallpaper setting conditions, the method for wallpaper setting further comprises:
obtaining a wallpaper generation instruction, and obtaining at least two prompts according to the wallpaper generation instruction;
generating, through the preset wallpaper generation model, wallpapers according to a wallpaper generation statement obtained from the at least two prompts, wherein the wallpaper generation statement comprises a plurality of restrictive conditions based on the at least two prompts; and
forming the wallpaper database based on the wallpapers generated through the preset wallpaper generation model, wherein information tags of each of the wallpapers generated according to the at least two prompts comprise at least part of the at least two prompts.

3. The method for wallpaper setting of claims 1 or 2, wherein forming the wallpaper database based on the wallpapers generated through the preset wallpaper generation model comprises:
parsing each of the wallpapers generated through the preset wallpaper generation model, to obtain image content;
obtaining information tags of each of the wallpapers based on the image content;
eliminating a wallpaper whose image content and/or information tags meet a preset elimination rule from the wallpapers generated through the preset wallpaper generation model; and
adding remaining wallpapers in the wallpapers generated through the preset wallpaper generation model to the wallpaper database.

4. The method for wallpaper setting of claims 1 or 2, wherein the candidate wallpapers are implemented as a plurality of candidate wallpapers, and displaying the at least part of the candidate wallpapers on the display of the electronic device comprises:
displaying all the candidate wallpapers on the display of the electronic device in a random order, or displaying the at least part of the candidate wallpapers on the display of the electronic device comprises:
counting a number of times that each of the candidate wallpapers is used; and
displaying m candidate wallpapers with the lowest usage counts among all the candidate wallpapers on the display of the electronic device in an ascending order of usage counts, wherein *m* ≥ 1.

5. The method for wallpaper setting of any preceding claim, wherein after displaying the at least part of the candidate wallpapers on the display of the electronic device, the method for wallpaper setting further comprises:
in response to a wallpaper switching instruction being still received after each of the candidate wallpapers is displayed, performing at least semantic association on the at least two wallpaper setting conditions, and directly invoking the preset wallpaper generation model to generate, according to a semantic association result, a new wallpaper.

6. The method for wallpaper setting of any preceding claim, wherein after displaying the at least part of the candidate wallpapers on the display of the electronic device, the method for wallpaper setting further comprises:
in response to a wallpaper switching instruction being still received after each of the candidate wallpapers is displayed, determining whether computing power of the electronic device is less than a preset computing power threshold;
in response to the computing power of the electronic device being greater than or equal to the preset computing power threshold, performing at least semantic association on the at least two wallpaper setting conditions, and directly invoking the preset wallpaper generation model to generate, according to a semantic association result, a new wallpaper; and
in response to the computing power of the electronic device being less than the preset computing power threshold, sending the at least two wallpaper setting conditions to a cloud server, to make the cloud server perform at least semantic association on the at least two wallpaper setting conditions and invoke the preset wallpaper generation model to generate, according to the semantic association result, the new wallpaper; and obtaining the new wallpaper generated by the cloud server.

7. The method for wallpaper setting of claims 5-6, wherein performing at least semantic association on the at least two wallpaper setting conditions and directly invoking the preset wallpaper generation model to generate, according to the semantic association result, the new wallpaper comprise:
identifying a style of icons on a display interface currently displayed on the display of the electronic device, to obtain corresponding icon-style information; and
performing semantic association on the icon-style information and the at least two wallpaper setting conditions, and generating, through the preset wallpaper generation model, a candidate wallpaper according to the semantic association result, or
identifying a layout of icons on a display interface currently displayed on the display of the electronic device; and
performing semantic association on the at least two wallpaper setting conditions, and generating, through the preset wallpaper generation model according to the semantic association result, a candidate wallpaper that matches the layout of the icons on the display interface.

8. The method for wallpaper setting of claims 5-7, wherein performing at least semantic association on the at least two wallpaper setting conditions and directly invoking the preset wallpaper generation model to generate, according to the semantic association result, the new wallpaper comprise:
performing at least semantic association on the at least two wallpaper setting conditions, and generating, through the preset wallpaper generation mode, a candidate wallpaper according to the semantic association result; and
generating, through the preset wallpaper generation model, new icons corresponding to the candidate wallpaper.

9. The method for wallpaper setting of any preceding claim, wherein the wallpapers generated through the preset wallpaper generation model comprise a dynamic wallpaper, and generating, through the preset wallpaper generation model, the wallpapers according to the wallpaper generation statement obtained from the at least two prompts comprises:
obtaining a corresponding wallpaper generation statement according to the at least two prompts;
generating, through the preset wallpaper generation model according to the wallpaper generation statement, at least one set of static images each comprising a target element, wherein the target element is associated with the wallpaper generation statement, and each set of static images comprises at least two static images; and
performing dynamic transition processing on two adjacent static images in each set of static images based on the target element, to obtain one dynamic wallpaper, wherein a number of times that dynamic transition processing is performed on any two adjacent static images in each set of static images is at least once, and one corresponding transition image is obtained through each dynamic transition processing.

10. The method for wallpaper setting of any preceding claim, wherein comparing the at least two wallpaper setting conditions with the information tags of the wallpapers in the wallpaper database and matching out, from the wallpaper database, the candidate wallpapers each of which has information tags comprising the at least two wallpaper setting conditions comprise:
obtaining user use information of the electronic device; and
comparing the at least two wallpaper setting conditions with the information tags of the wallpapers in the wallpaper database, and matching out, from the wallpaper database, candidate wallpapers, wherein information tags of each of the candidate wallpapers comprise the at least two wallpaper setting conditions and each of the candidate wallpapers matches the user use information.

11. The method for wallpaper setting of any preceding claim, wherein the electronic device is provided with a plurality of first-type wallpaper setting conditions and a plurality of second-type wallpaper setting conditions, and obtaining the at least two wallpaper setting conditions comprises:
in response to a random wallpaper generation instruction, obtaining randomly one first-type wallpaper setting condition from the plurality of first-type wallpaper setting conditions, and obtaining randomly one second-type wallpaper setting condition from the plurality of second-type wallpaper setting conditions.

12. The method for wallpaper setting of any preceding claim, wherein obtaining the at least two wallpaper setting conditions comprises:
obtaining a phrase and/or a segment input by a user; and
converting, through a preset language model, the phrase and/or the segment input by the user into the at least two wallpaper setting conditions.

13. An electronic device comprising a display, a processor, and a memory, the display, the processor, and the memory being coupled with one other, the memory being configured to store a computer program, and the processor being configured to execute the computer program to perform the method of claim 1.

14. A computer program comprising instructions which, when executed by the processor of the electronic device, cause the electronic device to carry out the method of claim 1.

15. A computer-readable storage medium configured to store the computer program of claim 14 which, when invoked and executed by a processor of an electronic device, causes the processor to perform the method of claim 1.
